# EUROPEAN PATENT SPECIFICATION

(11) **EP 3 109 681 B1**
(45) Date of publication and mention of the grant of the patent: **07.08.2019**
(21) Application number: 16176153.1
(22) Date of filing: 24.06.2016
(51) Int. Cl.: G02B 6/42, G02B 6/293

(54) **OPTICAL ASSEMBLY AND OPTICAL MODULE**
OPTISCHE ANORDNUNG UND OPTISCHES MODUL
ENSEMBLE OPTIQUE ET MODULE OPTIQUE

(30) Priority: 26.06.2015 CN 201510364009
(43) Date of publication of application: 28.12.2016
(73) Proprietor: Huawei Technologies Co., Ltd., Longgang District Shenzhen, Guangdong 518129 (CN)
(72) Inventor: ZHOU, Chuang, 518129 Shenzhen (CN); HU, Chihao, 518129 Shenzhen (CN); HU, Rui, 518129 Shenzhen (CN)
(74) Representative: Thun, Clemens

(56) References cited:
- CN-A- 104 597 576
- US-A1- 2012 063 721
- US-A1- 2014 226 988
- US-A1- 2015 086 165

## Description

### TECHNICAL FIELD

Embodiments of the present invention relate to optoelectronic technologies, and in particular, to an optical assembly and an optical module.

### BACKGROUND

To keep up with the explosive growth of data services, optoelectronic interconnection modules of an enterprise network and a data center develop towards a trend of a higher speed and a higher density. In a case in which a unit bit rate of a photoelectric device is fully developed, an optical module for which parallel cables are used becomes a solution of further improving receiving and sending efficiency, for example, a protocol module such as a quad SFP (QSFP) interface based on a multiple-fiber push-on/pull-off (MPO) interface, and a 120 GB/s 12x Small Form-factor Pluggable (CXP) interface.

For example, US 2015/0086165A1 refers to an optical receptacle and optical module provided with the same.

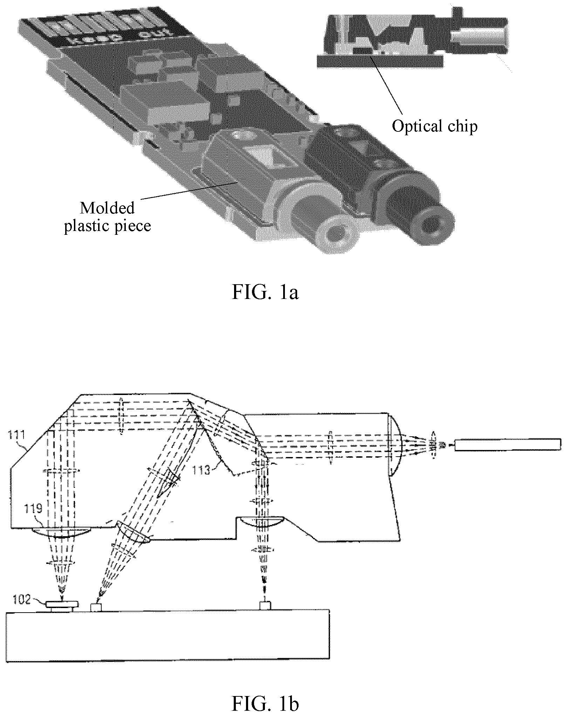

Currently, a package technology commonly used for the optical module includes a transistor-outline can (TO-CAN) and a chip on board technology (COB). FIG. 1a is a schematic diagram of an optical module packaged by means of the COB, and FIG. 1b is a schematic diagram of a commonly used molded plastic piece. As shown in FIG. 1a and FIG. 1b, a manner in which the optical module is packaged by means of the COB is directly fastening an optical chip (for example, a laser or a PD) on a printed circuit board (PCB) by using an integrally formed molded plastic piece, where two prisms are disposed in the molded plastic piece, light from a laser 102 is collimated by a lens 119 and then is turned horizontal by a reflection surface 111, and after travelling through a part of an optical path, a part of rays are reflected by a disposed clearance surface 113 to a monitor photodetector (MPD) for energy testing. In the manner, a clearance needs to be added to a design of the optical path, and a length of the optical path is relatively long.

However, when the molded plastic piece in the optical module is packaged by means of the COB, because the optical path is relatively long, a length of the molded plastic piece is caused to be relatively long, making it difficult to implement miniaturization of the optical module.

### SUMMARY

Embodiments of the present invention provide an optical assembly and an optical module, so as to resolve a problem that when a COB technology is used for an optical module, a length of a molded plastic piece is caused to be relatively long because of an optical path, making it difficult to implement miniaturization of the optical module.

A first aspect of the present invention provides an optical assembly, according to claim 1. The optical assembly comprises:
a main body and a total reflection device, where
the main body includes a fiber connection portion and a light processing portion, where the fiber connection portion is connected to the light processing portion;
the fiber connection portion is connected to an external fiber; and
a light splitting surface is disposed in the light processing portion and is in contact with the total reflection device, where the light splitting surface is configured to reflect a part of incident rays to a monitor photodetector MPD, and transmit the other part of the incident rays; and the total reflection device is disposed in the light processing portion, configured to reflect, to the fiber connected to the fiber connection portion, the incident rays transmitted by the light splitting surface.

With reference to the first aspect, in a first possible implementation manner of the first aspect, a first lens and a second lens are further disposed in the light processing portion, where the first lens is disposed at a position from which the incident rays enter an optical path, and is configured to refract dispersed incident rays to parallel incident rays; and the second lens is disposed on an optical path that is obtained after reflection by the total reflection device, and is configured to focus the incident rays reflected by the total reflection device.

With reference to the first aspect or the first possible implementation manner of the first aspect, in a second possible implementation manner of the first aspect, the total reflection device includes a reflection sheet or a total reflection profile.

With reference to the second possible implementation manner of the first aspect, in a third possible implementation manner of the first aspect, an angle range of a first included angle between a reflective surface of the total reflection device and the incident rays is 30 degrees to 60 degrees.

With reference to the third possible implementation manner of the first aspect, in a fourth possible implementation manner of the first aspect, the first included angle is 45 degrees.

With reference to the first aspect or any one of the first to the fourth possible implementation manners of the first aspect, in a fifth possible implementation manner of the first aspect, an angle range of a second included angle between a plane on which the light splitting surface is located and the incident rays is 45 degrees to 90 degrees.

With reference to the first aspect or any one of the first to the fifth possible implementation manners of the first aspect, in a sixth possible implementation manner of the first aspect, the main body is in an integrally formed structure.

A second aspect of the present invention provides an optical module, including: an optical module circuit, a substrate, and an optical assembly, where the optical module circuit includes a monitor photodetector MPD, and the optical module circuit and the optical assembly are disposed on the substrate; and
the optical assembly includes a main body and a total reflection device, where the main body includes a fiber connection portion and a light processing portion, where the fiber connection portion is connected to the light processing portion, the fiber connection portion is connected to an external fiber, a light splitting surface is disposed in the light processing portion and is in contact with the total reflection device, the total reflection device is disposed in the light processing portion, and the light splitting surface is configured to reflect a part of incident rays to the MPD, and transmit the other part of the incident rays; and the total reflection device is configured to reflect, to the fiber connected to the fiber connection portion, the incident rays transmitted by the light splitting surface.

With reference to the second aspect, in a first possible implementation manner of the second aspect, a first lens and a second lens are further disposed in the light processing portion, where the first lens is disposed at a position from which the incident rays enter an optical path, and is configured to refract dispersed incident rays to parallel incident rays; and the second lens is disposed on an optical path that is obtained after reflection by the total reflection device, and is configured to focus the incident rays reflected by the total reflection device.

With reference to the second aspect or the first possible implementation manner of the second aspect, in a second possible implementation manner of the second aspect, the optical module circuit further includes a laser, where the laser is configured to generate the incident rays.

With reference to the second aspect or the first or the second possible implementation manner of the second aspect, in a third possible implementation manner of the second aspect, the optical module circuit further includes a photodetector (PD), where the light splitting surface is configured to reflect received rays to the PD.

According to the optical assembly and the optical module provided in the present invention, a total reflection device is directly disposed in a light processing portion, and a light splitting surface is disposed to transmit a part of incident rays to the total reflection device, where the incident rays are reflected to a connected fiber by the total reflection device, and the light splitting surface may directly reflect a small part of the incident rays to an MPD for testing. In this way, an optical path is relatively short, and package can be performed by means of a COB, thereby
decreasing a size of the optical assembly, and implementing miniaturization of the optical module to which the optical assembly is applied.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1a is a schematic diagram of an optical module packaged by means of a COB;
FIG. 1b is a schematic diagram of a commonly used molded plastic piece;
FIG. 2a is a front view of a structure of Embodiment 1 of an optical assembly according to the present invention;
FIG. 2b is a 3D diagram of a structure of Embodiment 1 of an optical assembly according to the present invention;
FIG. 3 is a schematic sectional view of Embodiment 2 of an optical assembly not according to the present invention;
FIG. 4 is a schematic structural diagram of Embodiment 1 of an optical module according to the present invention; and
FIG. 5 is a schematic diagram of an optical path in an embodiment of an optical module according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

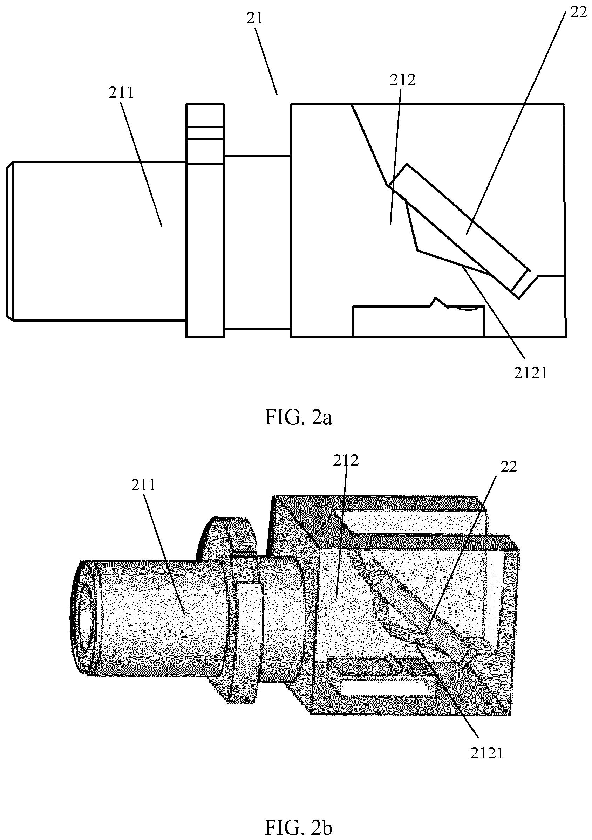

FIG. 2a is a front view of a structure of Embodiment 1 of an optical assembly according to the present invention; and FIG. 2b is a 3D diagram of a structure of Embodiment 1 of an optical assembly according to the present invention. As shown in FIG. 2a and FIG. 2b, the optical assembly includes a main body 21 and a total reflection device 22, where the main body 21 includes a fiber connection portion 211 and a light processing portion 212, where the fiber connection portion 211 is connected to the light processing portion 212, and the fiber connection portion 211 is connected to an external fiber; a light splitting surface 2121 is disposed in the light processing portion 212, and is in contact with the total reflection device, where the light splitting surface 2121 is configured to reflect a part of incident rays to a monitor photodetector (English: Monitor Photo Detector, MPD for short), and transmit the other part of the incident rays; and the total reflection device 22 is disposed in the light processing portion 212, configured to reflect, to the fiber connected to the fiber connection portion 211, the incident rays transmitted by the light splitting surface 2121.

In Embodiment 1, as shown in FIG. 2a and FIG. 2b, the total reflection device 22 is disposed on the main body 21, so that incident rays can be reflected, and the light processing portion 212 is configured to process the incident rays. The light splitting surface 2121 is disposed by means of a Fresnel reflection effect of a sloping surface, and a smooth sloping surface, that is, the light splitting surface 2121, is formed in the light processing portion 212 of the main body 21 by hollowing an optical path along which the incident rays are input. Most incident rays may be transmitted by the sloping surface. Because of the intrinsic Fresnel reflection effect, a small part of the incident rays are reflected to the disposed MPD, and a photon-generated current is generated, which may reflect a value of an output optical power.

When the optical assembly is applied, both a key chip and optical chip (for example, a laser) are placed on a substrate, and then the optical assembly is packaged at a proper position by using a COB technology.

According to the optical assembly provided in Embodiment 1, a total reflection device is directly disposed in a light processing portion, and a light splitting surface is disposed to transmit a part of incident rays to the total reflection device, where the incident rays are reflected to a connected fiber by the total reflection device, and the light splitting surface may directly reflect a small part of the incident rays to an MPD for testing. In this way, an optical path is relatively short, and package can be performed by means of a COB, thereby decreasing a size of the optical assembly, and implementing miniaturization of an optical module to which the optical assembly is applied.

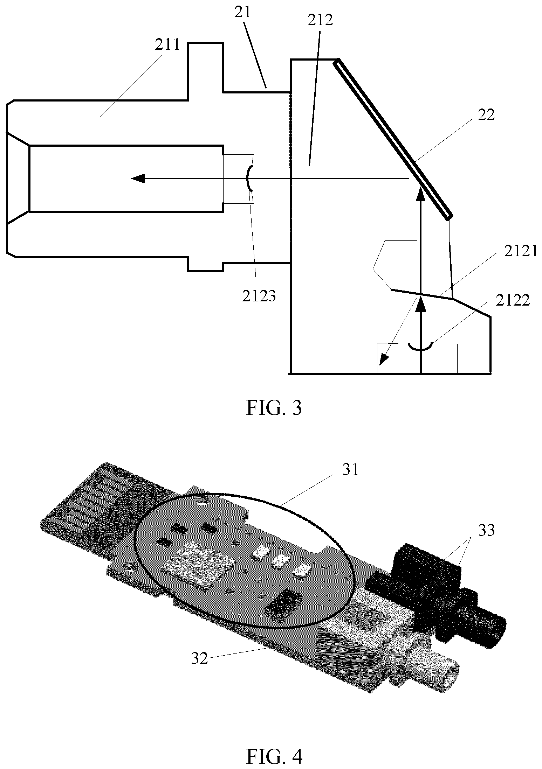

FIG. 3 is a schematic sectional view of Embodiment 2 of an optical assembly not according to the present invention. As shown in FIG. 3, based on FIG. 2, a first lens 2122 and a second lens 2123 are further disposed in the light processing portion 212 of the optical assembly, where the first lens 2122 is disposed at a position from which the incident rays enter an optical path, and is configured to refract dispersed incident rays to parallel incident rays; and the second lens 2123 is disposed on an optical path that is obtained after reflection by the total reflection device 22, and is configured to focus the incident rays reflected by the total reflection device.

In Embodiment 2 the total reflection device 22 includes a reflection sheet or a total reflection profile, or may be another device having a total reflection function. Generally, an angle range of a first included angle between a reflective surface of the total reflection device and the incident rays is 30 degrees to 60 degrees. As long as the incident rays can be reflected to the fiber connected to the fiber connection portion, a specific value of the first included angle is not limited in this solution.

Preferably, the first included angle may be 45 degrees. As shown in FIG. 3, when the incident rays are input in a direction perpendicular to a horizontal direction in the figure, the incident rays are refracted by the first lens 2122 into parallel rays, and are transmitted by the light splitting surface 2121 to the reflective surface of the optical reflection device; if the first included angle is 45 degrees, the incident rays may be precisely reflected to the rayconnected to the ray connection portion 211 that is parallel to a horizontal plane.

In addition, an angle range of a second included angle between a plane on which the light splitting surface 2121 is located and the incident rays is 45 degrees to 90 degrees. That is, as a position shown in FIG. 3, an included angle between the light splitting surface 2121 and the horizontal plane is less than 45 degrees. A specific value of the second included angle is not limited in this application, as long as a small part of the incident rays that are reflected by the light splitting surface can be transmitted to the MPD.

In Embodiment 2, the main body is an injection molded part in an integrally formed structure.

Similarly, using FIG. 3 as an example, for a transmit optical path, when dispersed rays are input to a plastic molded part, the rays are turned into parallel rays by the first lens. When passing through the light splitting surface, most parallel rays are transmitted by the light splitting surface, and then are transmitted to the fiber after being reflected by the total reflection device and being focused once by the second lens. A small part of the incident rays that are not transmitted by the light splitting surface and are reflected by the light splitting surface are reflected to the MPD for testing, where the light splitting surface is disposed by means of a Fresnel reflection effect of a sloping surface. Because of the intrinsic Fresnel reflection effect, a small part of the rays are reflected to the MPD, and a photon-generated current is generated. A value of the current may reflect a value of an output optical power.

According to the optical assembly provided in Embodiment 2, a total reflection device is directly disposed in a light processing portion, and a light splitting surface is disposed to transmit a part of incident rays to the total reflection device, where the incident rays are reflected to a connected fiber by the total reflection device, and the light splitting surface may directly reflect a small part of the incident rays to an MPD for testing. In this way, an optical path is relatively short, and package can be performed by means of a COB, thereby decreasing a size of the optical assembly, and implementing miniaturization of an optical module to which the optical assembly is applied. In addition, a first lens and a second lens are disposed to focus rays, improving a processing effect of the rays.

FIG. 4 is a schematic structural diagram of an Embodiment of an optical module according to the present invention. As shown in FIG. 4, the optical module includes: an optical module circuit 31, a substrate 32, and an optical assembly 33, where the optical module circuit 31 includes an MPD, and the optical module circuit 31 and the optical assembly 33 are disposed on the substrate 32; and
the optical assembly 33 includes a main body and a total reflection device, where the main body includes a fiber connection portion and a light processing portion, where the fiber connection portion is connected to the light processing portion, the fiber connection portion is connected to an external fiber, a light splitting surface is disposed in the light processing portion and is in contact with the total reflection device, and the total reflection device is disposed in the light processing portion, where if the optical assembly is applied to a transmit optical path, the light splitting surface is configured to reflect a part of incident rays to the MPD, and transmit the other part of the incident rays; and the total reflection device is configured to reflect, to the fiber connected to the fiber connection portion, the incident rays transmitted by the light splitting surface.

In this embodiment, the light processing portion is configured to process the incident rays, and the optical assembly 33 is the optical assembly shown in FIG. 2. Specifically, a first lens and a second lens are further disposed in the light processing portion, where the first lens is disposed at a position from which the incident rays enter an optical path, and is configured to refract dispersed incident rays to parallel incident rays; and the second lens is disposed on an optical path that is obtained after reflection by the total reflection device, and is configured to focus the incident rays reflected by the total reflection device.

Optically, the optical module circuit 31 further includes a laser, where the laser is configured to generate the incident rays.

In addition, all key chips are placed on the substrate 32, which may be a PCB, a flexible substrate, a ceramic substrate, or an organic substrate.

The optical assembly 33 in this application may be effectively applied to a pluggable module, and an application example of the pluggable module is a small form-factor pluggable (English: Small Form-factor Pluggable, SFP for short) optical module shown in FIG. 4. The optical assembly 33 may be directly placed on a PCB in the SFP, and directly externally connected to an LC plug, and internally connected to the laser or a receiver chip. In this embodiment, the laser and a driver (or the receiver chip and a trans-impedance-amplifier (English: trans-impedance-amplifier, TIA for short)) in a transmit part are placed under the main body of the optical assembly and on the module PCB. Using the transmit part as an example, a board on which the module is located inputs an electrical signal to the driver by using an electrical interface of the module, and the driver drives the laser after receiving the signal, so that the laser sends an optical signal. A path on a receive side is precisely reverse. At an end of an optical transmission system, an LC fiber sends an optical chip, which is transferred to the optical assembly part in this application, and separately output to the receiver chip in a photodetector (PD). After being amplified by the TIA, a received chip is output to the electrical interface of the module, and is finally processed on the board on which the module is located.

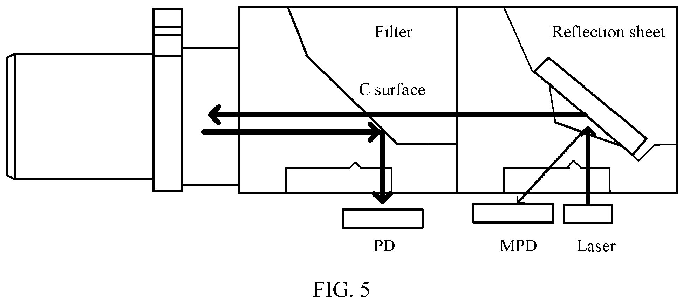

FIG. 5 is a schematic diagram of an optical path in an embodiment of an optical module according to the present invention. As shown in FIG. 5, the optical assembly 33 not only may be applied to a transmit optical path, but also may be applied to a receive optical path. If the optical assembly 33 is applied to the receive optical path, the optical module circuit further includes a PD, where the light splitting surface is configured to reflect received rays to the PD.

Based on the foregoing embodiments, the optical assembly may be further effectively applied to a module, for example, a cascaded wavelength multiplexing scenario. Specifically, as shown in FIG. 5, transmitted rays and received rays have different wavelengths, and a filter is designed to perform transmission for one wavelength, and perform reflection for another wavelength, thereby implementing a BiDi transmission function. For example, in the figure, for the transmit optical path, when dispersed rays are input to the optical assembly, the rays are turned into parallel rays by a curved lens. The parallel rays are reflected by a reflection sheet, then are transmitted by the filter, and are input to a fiber after being focused once by a lens.

For the receive optical path, after light output from the fiber is collimated by the lens, due to a 45-degree included angle formed between the light splitting surface (that is, a C surface in the figure) and the horizontal plane, the rays output by the fiber are reflected downward by the light splitting surface according to a total reflection effect, and are input to the PD after being focused once by the lens.

Application of the optical assembly of this application includes a reverse design of receiving and transmission, for example, positions of the laser and the PD are exchanged, and the C surface is turned into a sloping surface, where a same principle is used.

According to the optical module provided in this embodiment, an improved optical module is applied to a transmit optical path or a receive optical path, a total reflection device is directly disposed in a light processing portion, and a light splitting surface is disposed to transmit a part of incident rays to the total reflection device, where the incident rays are reflected to a connected fiber by the total reflection device, and the light splitting surface may directly reflect a small part of the incident rays to an MPD for testing. In this way, an optical path is relatively short, and package can be performed by means of a COB, thereby decreasing a size of an optical assembly, and implementing miniaturization of the optical module to which the optical assembly is applied. In addition, a transmit optical power monitoring function is integrated, which can implement a module digital monitoring function, and can implement a wavelength division multiplexing function by means of multistage cascading.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An optical assembly, wherein the assembly comprises: a main body (21) and a total reflection device (22), wherein
the main body (21) comprises a fiber connection portion (211) and a light processing portion (212), wherein the fiber connection portion (211) is connected to the light processing portion (212);
the fiber connection portion (211) is connected to an external fiber; and
a light splitting surface (2121) is disposed in the light processing portion (212), wherein the light splitting surface (2121) is configured to reflect a part of incident rays to a monitor photodetector MPD, and transmit the other part of the incident rays; and the total reflection device (22) is disposed in the light processing portion (212), configured to reflect, to the fiber connected to the fiber connection portion (211), the incident rays transmitted by the light splitting surface (2121), **characterized in that**
the light splitting surface (2121) is in contact with the total reflection device (22).

2. The optical assembly according to claim 1, wherein a first lens and a second lens are further disposed in the light processing portion, wherein the first lens is disposed at a position from which the incident rays enter an optical path, and is configured to refract dispersed incident rays to parallel incident rays; and the second lens is disposed on an optical path that is obtained after reflection by the total reflection device, and is configured to focus the incident rays reflected by the total reflection device.

3. The optical assembly according to claim 1 or 2, wherein the total reflection device comprises a reflection sheet or a total reflection profile.

4. The optical assembly according to claim 3, wherein an angle range of a first included angle between a reflective surface of the total reflection device and the incident rays is 30 degrees to 60 degrees.

5. The optical assembly according to claim 4, wherein the first included angle is 45 degrees.

6. The optical assembly according to any one of claims 1 to 5, wherein an angle range of a second included angle between a plane on which the light splitting surface is located and the incident rays is 45 degrees to 90 degrees.

7. The optical assembly according to any one of claims 1 to 6, wherein the main body is in an integrally formed structure.

8. An optical module, wherein the module comprises: an optical module circuit, a substrate, and an optical assembly according to claim 1, wherein the optical module circuit comprises a monitor photodetector MPD, and the optical module circuit and the optical assembly are disposed on the substrate.

9. The optical module according to claim 8, wherein a first lens and a second lens are further disposed in the light processing portion, wherein the first lens is disposed at a position from which the incident rays enter an optical path, and is configured to refract dispersed incident rays to parallel incident rays; and the second lens is disposed on an optical path that is obtained after reflection by the total reflection device, and is configured to focus the incident rays reflected by the total reflection device.

10. The optical module according to claim 8 or 9, wherein the optical module circuit further comprises a laser, wherein the laser is configured to generate the incident rays.

11. The optical module according to any one of claims 8 to 10, wherein the optical module circuit further comprises a photodetector PD, wherein the light splitting surface is configured to reflect received rays to the PD.

## Patentansprüche

1. Optische Baugruppe, wobei die Baugruppe folgendes umfasst: einen Hauptkörper (21) und eine Totalreflexionsvorrichtung (22), wobei
der Hauptkörper (21) einen ersten Faserverbindungsteil (211) und einen Lichtverarbeitungsteil (212) umfasst, wobei der Faserverbindungsteil (211) mit dem Lichtverarbeitungsteil (212) verbunden ist;
der Faserverbindungsteil (211) mit einer externen Faser verbunden ist; und
eine Lichtteilungsoberfläche (2121) in dem Lichtverarbeitungsteil (212) angeordnet ist, wobei die Lichtteilungsoberfläche (2121) zum Reflektieren eines Teils von einfallenden Strahlen zu einem Überwachungsfotodetektor MPD und Transmittieren des anderen Teils der einfallenden Strahlen konfiguriert ist; und
die Totalreflexionsvorrichtung (22) in dem Lichtverarbeitungsteil (212) angeordnet ist, zum Reflektieren der einfallenden Strahlen, die durch die Lichtteilungsoberfläche (2121) transmittiert werden, zu der Faser, die mit dem Faserverbindungsteil (211) verbunden ist, konfiguriert ist, **dadurch gekennzeichnet, dass**
sich die Lichtteilungsoberfläche (2121) in Kontakt mit der Totalreflexionsvorrichtung (22) befindet.

2. Optische Baugruppe nach Anspruch 1, wobei eine erste Linse und eine zweite Linse ferner in dem Lichtverarbeitungsteil angeordnet sind, wobei die erste Linse bei einer Position angeordnet ist, von der die einfallenden Strahlen in einen optischen Pfad eintreten, und dazu konfiguriert ist, ein zerstreute einfallende Strahlen zu parallelen einfallenden Strahlen zu brechen; und wobei die zweite Linse in einem optischen Pfad angeordnet ist, der nach einer Reflexion durch die Totalreflexionsvorrichtung erhalten wird, und dazu konfiguriert ist, die einfallenden Strahlen, die durch die Totalreflexionsvorrichtung reflektiert werden, zu fokussieren.

3. Optische Baugruppe nach Anspruch 1 oder 2, wobei die Totalreflexionsvorrichtung eine Reflexionsplatte oder ein Totalreflexionsprofil umfasst.

4. Optische Baugruppe nach Anspruch 3, wobei ein Winkelbereich des ersten eingeschlossenen Winkels zwischen einer reflektierenden Oberfläche der Totalreflexionsvorrichtung und den einfallenden Strahlen 30 Grad bis 60 Grad beträgt.

5. Optische Baugruppe nach Anspruch 4, wobei der erste eingeschlossene Winkel 45 Grad beträgt.

6. Optische Baugruppe nach einem der Ansprüche 1 bis 5, wobei ein Winkelbereich eines zweiten eingeschlossenen Winkels zwischen einer Ebene, auf der sich die Lichtteilungsoberfläche befindet, und den einfallenden Strahlen 45 Grad bis 90 Grad beträgt.

7. Optische Baugruppe nach einem der Ansprüche 1 bis 6, wobei sich der Hauptkörper in einer integral gebildeten Struktur befindet.

8. Optisches Modul, wobei das Modul Folgendes umfasst: einen Optikmodulschaltkreis, ein Substrat und eine optische Baugruppe nach Anspruch 1, wobei der Optikmodulschaltkreis einen Überwachungsfotodetektor MPD umfasst und der Optikmodulschaltkreis und die optische Baugruppe auf dem Substrat angeordnet sind.

9. Optisches Modul nach Anspruch 8, wobei eine erste Linse und eine zweite Linse ferner in dem Lichtverarbeitungsteil angeordnet sind, wobei die erste Linse bei einer Position angeordnet ist, von der die einfallenden Strahlen in einen optischen Pfad eintreten, und dazu konfiguriert ist, zerstreute einfallende Strahlen zu parallelen einfallenden Strahlen zu brechen; und wobei die zweite Linse in einem optischen Pfad angeordnet ist, der nach einer Reflexion durch die Totalreflexionsvorrichtung erhalten wird, und dazu konfiguriert ist, die einfallenden Strahlen, die durch die Totalreflexionsvorrichtung reflektiert werden, zu fokussieren.

10. Optisches Modul nach Anspruch 8 oder 9, wobei der Optikmodulschaltkreis ferner einen Laser umfasst, wobei der Laser dazu konfiguriert ist, die einfallenden Strahlen zu erzeugen.

11. Optisches Modul nach einem der Ansprüche 8 bis 10, wobei der Optikmodulschaltkreis ferner einen Fotodetektor PD umfasst, wobei die Lichtteilungsoberfläche dazu konfiguriert ist, empfangene Strahlen zu dem PD zu reflektieren.

## Revendications

1. Ensemble optique, dans lequel l'ensemble comprend : un corps principal (21) et un dispositif à réflexion totale (22), dans lequel
le corps principal (21) comprend une partie de connexion de fibre (211) et une partie de traitement de la lumière (212), dans lequel la partie de connexion de fibre (211) est connectée à la partie de traitement de la lumière (212) ;
la partie de connexion de fibre (211) est connectée à une fibre externe ; et
une surface de séparation de la lumière (2121) est disposée dans la partie de traitement de la lumière (212),
dans lequel la surface de séparation de la lumière (2121) est configurée pour réfléchir une partie des rayons incidents sur un photodétecteur de surveillance MPD (monitor photodetector) et transmettre l'autre partie des rayons incidents ; et le dispositif à réflexion totale (22) est disposé dans la partie de traitement de la lumière (212), configuré pour réfléchir, sur la fibre connectée à la partie de connexion de fibre (211), les rayons incidents transmis par la surface de séparation de la lumière (2121), **caractérisé en ce que** la surface de séparation de la lumière (2121) est en contact avec le dispositif à réflexion totale (22).

2. Ensemble optique selon la revendication 1, dans lequel une première lentille et une seconde lentille sont en outre disposées dans la partie de traitement de la lumière, dans lequel la première lentille est disposée dans une position à partir de laquelle les rayons incidents pénètrent dans un chemin optique, et est configurée pour réfracter des rayons incidente dispersée en des rayons incidents parallèles ; et la seconde lentille est disposée sur un chemin optique qui est obtenu après réflexion par le dispositif à réflexion totale et est configurée pour focaliser les rayons incidents réfléchis par le dispositif à réflexion totale.

3. Ensemble optique selon la revendication 1 ou 2, dans lequel le dispositif à réflexion totale comprend une feuille de réflexion ou un profil de réflexion totale.

4. Ensemble optique selon la revendication 3, dans lequel une plage d'angle d'un premier angle inclus entre une surface réfléchissante du dispositif à réflexion totale et les rayons incidents est comprise entre 30 et 60 degrés.

5. Ensemble optique selon la revendication 4, dans lequel le premier angle inclus est égal à 45 degrés.

6. Ensemble optique selon l'une quelconque des revendications 1 à 5, dans lequel une plage d'angle d'un second angle inclus entre un plan sur lequel se trouve la surface de séparation de la lumière et les rayons incidents est comprise entre 45 et 90 degrés.

7. Ensemble optique selon l'une quelconque des revendications 1 à 6, dans lequel le corps principal se trouve dans une structure réalisée en un seul bloc.

8. Module optique, dans lequel le module comprend : un circuit de module optique, un substrat et un ensemble optique selon la revendication 1,
dans lequel le circuit de module optique comprend un photodétecteur de surveillance MPD, et le circuit de module optique et l'ensemble optique sont disposés sur le substrat.

9. Module optique selon la revendication 8, dans lequel une première lentille et une seconde lentille sont en outre disposées dans la partie de traitement de la lumière, dans lequel la première lentille est disposée dans une position à partir de laquelle les rayons incidents pénètrent dans un chemin optique, et est configurée pour réfracter des rayons incidente dispersée en des rayons incidents parallèles ; et la seconde lentille est disposée sur un chemin optique qui est obtenu après réflexion par le dispositif à réflexion totale et est configurée pour focaliser les rayons incidents réfléchis par le dispositif à réflexion totale.

10. Module optique selon la revendication 8 ou 9, dans lequel le circuit de module optique comprend en outre un laser, dans lequel le laser est configuré pour générer les rayons incidents.

11. Module optique selon l'une quelconque des revendications 8 à 10, dans lequel le circuit de module optique comprend en outre un photodétecteur PD, dans lequel la surface de séparation de la lumière est configurée pour réfléchir les rayons reçus vers le PD.
